# EUROPEAN PATENT APPLICATION

(11) **EP 2 894 876 A1**
(43) Date of publication of application: **15.07.2015**
(21) Application number: 14176190.8
(22) Date of filing: 08.07.2014
(51) Int. Cl.: H04R 1/10, G10L 21/02, G10L 25/78, H04M 1/60

(54) **Audio processing method and system for wearable device using bone conduction sensors**

(30) Priority: 13.01.2014 US 201461926475 P
(71) Applicant: DSP Group Ltd., 4672505 Herzliya (IL)
(72) Inventor: Heiman, Arie, 4493500 Sde Warburg (IL); Roeimi, Roei, 4587000 Hagor (IL); Yehuday, Uri, 5964211 Bat Yam (IL)
(74) Representative: Modiano, Micaela Nadia

(57) **Abstract**

Methods and systems are provided for use of microphones with VSensors for wearable devices. VSensors may be used to detect and/or capture vibrations in bones. The captured bone vibrations may then be used to improve audio related operations. For example, bone vibrations may correspond to user audio input (e.g., speech), and as such the captured bone vibrations may be used in enhancing noise reduction functions in the wearable devices, by enabling distinguishing user audio input, as captured by microphone(s), from ambient noise. This may obviate the need to move the wearable device closer to the user's mouth (such that embedded microphones would be closer). The captured bone vibrations may also be analyzed to determine if they correspond to user control input (e.g., by means of finger tapping), such as by comparing them against predefined patterns.

## Description

### CLAIM OF PRIORITY

This patent application makes reference to, claims priority to and claims benefit from the United States Provisional Patent Application No. 61/926,475, filed on January 13, 2014, which is hereby incorporated herein by reference in its entirety.

### TECHNICAL FIELD

Aspects of the present disclosure relate to audio processing. More specifically, certain implementations of the present disclosure relate to use of microphones with VSensors for wearable devices.

### BACKGROUND

Existing methods and systems for capturing audio in wearable electronic devices may be inefficient and/or costly. Further limitations and disadvantages of conventional and traditional approaches will become apparent to one of skill in the art, through comparison of such approaches with some aspects of the present method and apparatus set forth in the remainder of this disclosure with reference to the drawings.

### BRIEF SUMMARY

A system and/or method is provided for use of microphones with VSensors for wearable devices, substantially as shown in and/or described in connection with at least one of the figures, as set forth more completely in the claims.

These and other advantages, aspects and novel features of the present disclosure, as well as details of illustrated implementation(s) thereof, will be more fully understood from the following description and drawings.

### BRIEF DESCRIPTION OF THE DRAWINGS

Fig. 1 illustrates an example wearable electronic device, along with example arrangements for using the wearable electronic device.
Fig. 2 illustrates example locations for placing wearable electronic devices.
Figs. 3A-3C illustrate example audio signals profiles associated with bone conduction locations and/or different bone conduction operations.
Fig. 4 illustrates an example structure of a wearable electronic device that may support use of vibration sensors to captured vibrations in a user's bones.
Fig. 5 is a flowchart illustrating an example process for using bone conduction sensory input in support of audio operations in wearable electronic devices.

### DETAILED DESCRIPTION

Certain example implementations may be found in method and system for use of microphones with VSensors for wearable devices. As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first plurality of lines of code and may comprise a second "circuit" when executing a second plurality of lines of code. As utilized herein, "and/or" means any one or more of the items in the list joined by "and/or". As an example, "x and/or y" means any element of the three-element set {(x), (y), (x, y)}. As another example, "x, y, and/or z" means any element of the seven-element set {(x), (y), (z), (x, y), (x, z), (y, z), (x, y, z)}. As utilized herein, the terms "block" and "module" refer to functions than can be performed by one or more circuits. As utilized herein, the term "example" means serving as a non-limiting example, instance, or illustration. As utilized herein, the terms "for example" and "e.g.," introduce a list of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled, or not enabled, by some user-configurable setting.

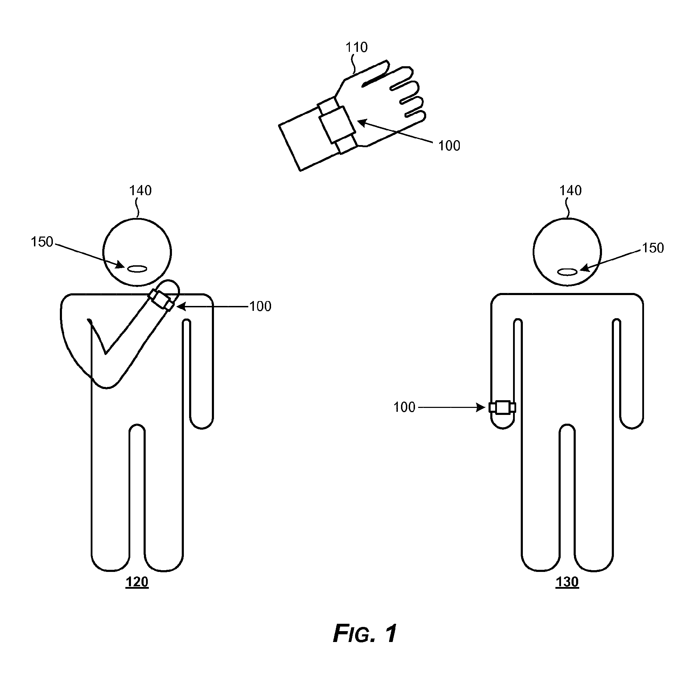

Fig. 1 illustrates an example wearable electronic device, along with example arrangements for using the wearable electronic device. Referring to Fig. 1, there is shown an electronic device 100.

The electronic device 100 may comprise suitable circuitry for implementing various aspects of the invention. The electronic device 100 may be operable to, for example, perform or support various functions, operations, applications, and/or services. The functions, operations, applications, and/or services performed or supported by the electronic device 100 may be run or controlled based on user instructions and/or pre-configured instructions.

In some instances, the electronic device 100 may support communications of data (to and/or from the electronic device 100), such as via wired and/or wireless connections, which may be setup and/or utilized in accordance with one or more wireless and/or wired protocols or standards supported by the electronic device 100.

In some instances, the electronic device 100 may support input and/or output of audio and other acoustic signals. The electronic device 100 may incorporate, for example, a plurality of audio input and/or output (I/O) components (e.g., microphones, speakers, and/or other audio I/O components), for use in outputting (playing) and/or inputting (capturing) audio, along with suitable circuitry for driving, controlling and/or utilizing the audio I/O components.

The electronic device 100 may be configured for use while being worn by the user. In this regard, the electronic device 100 may incorporate an element for allowing the device to be secured to the user's body (e.g., band, belt, strap or the like). Further, the electronic device 100 may be designed and/or implemented for allowing for use of the device on the move and/or at different locations. In this regard, the electronic device 100 may be designed and/or configured to allow for ease of movement, such as to allow it to be readily moved while being supported by the user as the user moves, and the electronic device 100 may be configured to perform at least some of the operations, functions, applications and/or services supported by the device on the move. Examples of wearable electronic devices may comprise digital watches and watch-like devices (e.g., iWatch), and devices that may be attachable to arm bands or the like. The disclosure, however, is not limited to any particular type of electronic device. In the particular example shown in Fig. 1, the electronic device 100 may be a watch-like device, which may be worn like a watch, such as on the wrist of device user's hand 110.

In operation, the electronic device 100 may be used to performed, execute, or provide various operations, tasks, functions, applications, and/or services, such as in accordance with preconfigured information and/or based on user interactions with the device. In some instances, the electronic device 100 may be used in inputting and/or outputting audio. In this regard, the audio input/output may relate to such functions as media related functions (e.g., listening to music or other multimedia comprising audio output, which may be stored locally or obtained from remote sources-i.e. 'streaming'); control related functions (e.g., voice commands)l; and/or communicative related functions-e.g., functions related to use of the electronic device 100 in communicating with other devices/users, whereby audio content (e.g., voice and/or other audio) may be exchanged, such as voice calls or the like.

Because the electronic device 100 is a wearable device (particularly, a watch-like device, as shown in Fig. 1, as non-limiting example), in some instances it may be necessary to adjust positioning of the device to ensure improved (or even acceptable) performance. For example, as shown in use scenario 120, during audio related operations in which a device user (e.g., user 140) may provide audio input (e.g., speech, such as during calls or voice commands), the user 140 may need to move the electronic device 100 closer to the user's mouth 150. This may be the case where there may be significant amount of ambient noise. In this regard, quality of audio inputted and/or outputted by electronic devices may be effected by and/or may depend on, among various factors, environmental conditions.

For example, quality of audio captured by electronic devices (e.g., via microphones) may be effected by a noisy environment. A noisy environment may be caused by various conditions, such as wind, ambient audio (e.g., other users talking in the vicinity, music, traffic, etc.), or the like. All of these conditions combined may be described hereinafter as ambient noise. Ambient noise may affect quality of audio in different ways. For example, ambient noise may be combined (unintentionally) with the intended audio (e.g., user's speech) that is captured by the device. As a result, audio content generated in the electronic device in response to user input may actually incorporate both desired content and non-desired content (corresponding to the ambient noise). Ambient noise may also interfere with user audio input, so much so that the electronic device may be incapable of picking up the user input at all. Thus, moving the electronic device 100 closer to the user's mouth 150, as shown in use scenario 120, may improve audio performance (particularly audio capturing) by reducing the effects of noise ambient, because the closer the electronic device 100 is to the user's mouth 150, the stronger the user's audio input would be in relation to the ambient noise. Nonetheless, moving the electronic device 100 close to the user's mouth 150 may not be desirable, as it may an inconvenience the user 140. Rather, it may be desirable to provide means for ensuring enhanced (or acceptable) audio performance (especially with respect to capturing user audio input) without requiring the user 140 to move the electronic device 100 close to the user's mouth 150, as shown in use scenario 130.

Accordingly, in various implementations of the present disclosure, wearable electronic devices (such as the electronic device 100) may be configured to utilize bone conduction sensing in conjunction with over-the-air audio input means (e.g., microphones), to enhance audio input performance. For example, the wearable electronic devices may incorporate vibration sensors (VSensors), which maybe operable to detect and/or capture vibrations in user's bones. The vibrations in user's bones may result from, at least in some instances, a user's actions that may be intended to be inputting of audio or other information (e.g., control information).

For example, when the user 140 speaks (e.g., to provide audio input, such as during voice call), the speech may cause vibrations in the bones used in (or may be located near the area) where sound is produced. These vibrations may then propagate throughout the user's skeleton. Also, in some instances, the vibrations may be caused by actions that the electronic device may be configured to take as control input. For example, tapping patterns (e.g., user 140 tapping fingers, such as on nearby surface or the like) may be predefined into the electronic device 100, such that they may be interpreted as particular control commands-e.g., a first tapping pattern may be interpreted as accepting a call, a second tapping pattern may be interpreted as ending a call, a third tapping pattern may be interpreted as increasing volume, etc. Thus, input obtained and/or captured via the VSensors may be processed, such as in conjunction with input obtained via the microphones, to enable enhancing the audio operations. For example, input obtained via the VSensors in this manner may be used to provide improved noise reduction-e.g., by using bone vibrations determined to result from a user's speech to better locate user audio input and/or distinguish the user audio input from ambient noise. Input obtained via the VSensors in this manner may also be used to allow obtaining user control input, in convenient way-e.g., without requiring direct interaction with the wearable device (without needing to touch the device, or any part thereof, for example), thus mitigating the need for undesirable repositioning of the device when providing control input (for example, control input may be provided without the need for use of both of user's hands-that is without requiring the user to use the free hand to press or touch the device attached on the other hand, and as such the wearable device does not need to be repositioned such that the free hand can be used to touch the device).

Use of vibration sensors (or bone conduction sensing at large), to enhance audio operations in wearable electronic devices, may be effected by various factors, however. For example, one particular consideration that may be pertinent for usability of vibration sensors may be location of a wearable electronic device on a user's body. In this regard, a human body may not necessarily provide a uniform bone conduction profile; rather, particular areas of the human body may be determined to be optimal for bone conduction (i.e. for capturing vibrations in the bones) whereas other areas may be exhibit poor or insufficient bone conduction (for reading vibrations in the bones). Variations in bone conduction characteristics, as well use (or accounting) thereof are explained in more detail in connection with the following figures.

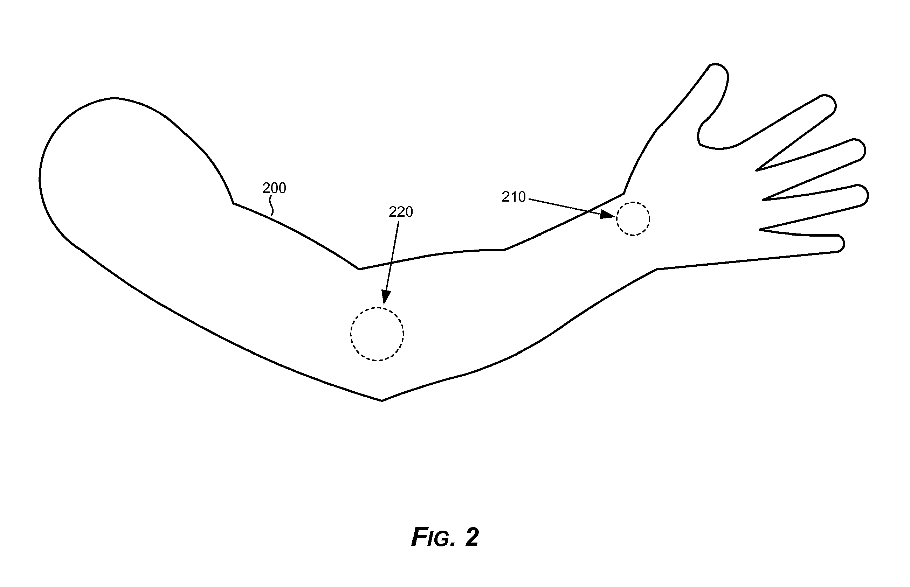

Fig. 2 illustrates example locations for placing wearable electronic devices. Referring to Fig. 2, there is shown an arm 200.

Human bodies may exhibit varying bone conduction characteristics, such as based on thickness of soft tissue over the bones—e.g., the closer bones are to surface/skin, the better bone conduction performance (in terms of being able to accurately capture and/or detect vibrations travelling in the bones). For example, on a typical human arm (e.g., the arm 200), there may be different locations which may be deemed optimal for capturing and/or reading vibrations in bones (e.g., locations where VSensors may be placed, for optimal performance). In the example arm 200 shown in Fig. 2, two such optimal locations are shown: the wrist area 210 and the elbow area 220. Both of these locations are characterized by very thin soft tissue, with the bones (the wrist bones and the bone ends forming the elbow joint) being covered by only a thin layer of skin.

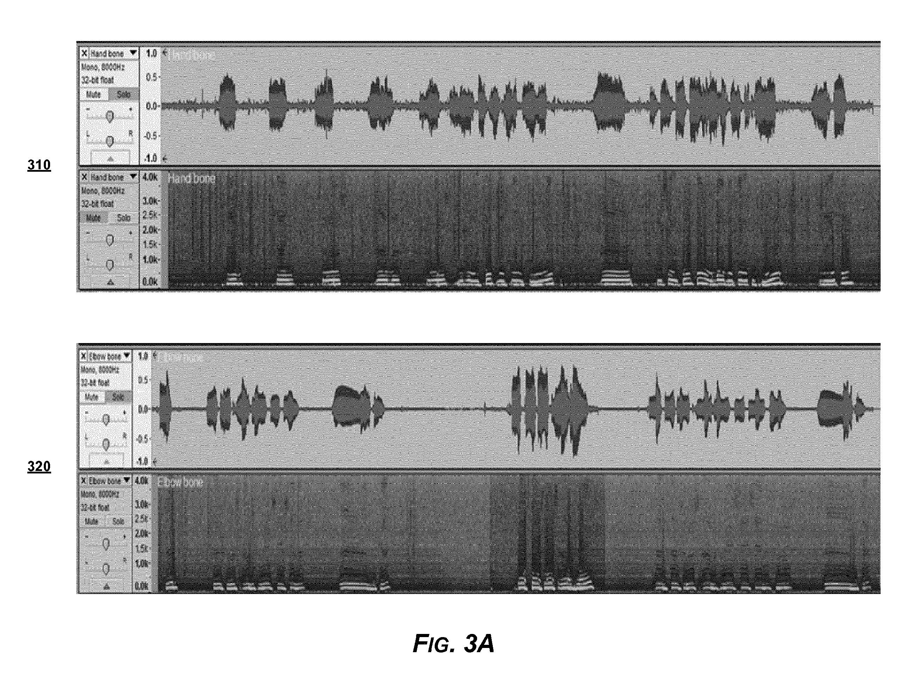

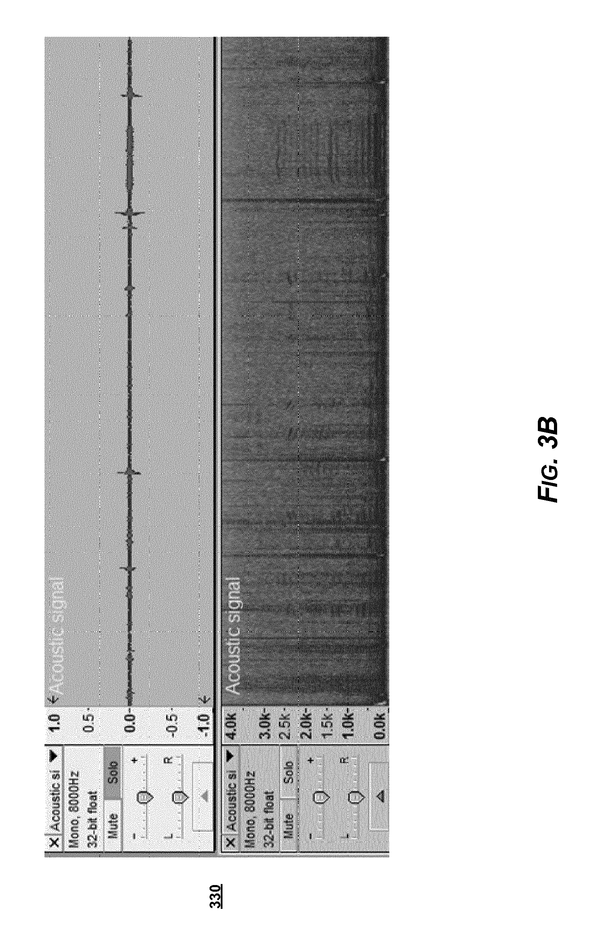

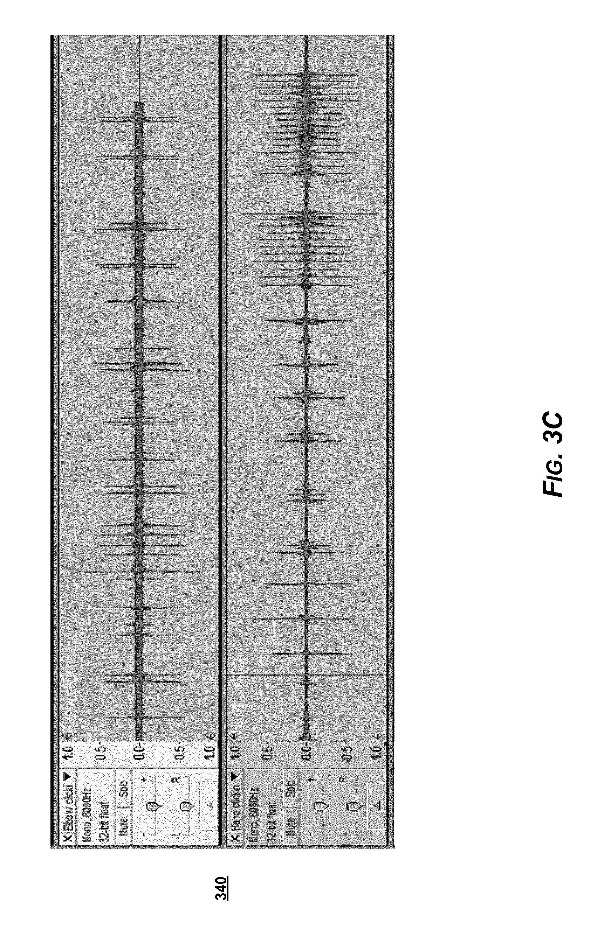

Consequently, placing VSensors at these locations-that is at the wrist area 210 and/or the elbow area 220-may yield optimal detection of any vibrations travelling through the bones, including vibrations caused by speech of the users and/or vibrations caused by other actions (e.g., by tapping of fingers). Figs. 3A-3B depict example bone conduction performance of these areas, when used in capturing vibrations resulting from user speech. These two locations coincidentally are also ideal for placement of wearable electronic devices—e.g., watch-like devices being typically worn around the wrist, which is the narrowest part of the forearm; whereas the elbow area (or just above it) is typically selected when band-based devices are worn, e.g., during sport activities.

Figs. 3A-3C illustrate example audio signals profiles associated with bone conduction locations and/or different bone conduction operations. Referring to Figs. 3A-3C, there are shown charts 310, 320, 330, and 340.

Each of the charts 310, 320, 330, and 340 may comprise wave and/or spectrogram measurements corresponding to signals captured via an example VSensor (e.g., vibrations in bones). The charts 310, 320, 330, and 340 illustrate example wave and/or spectrogram measurements of signals detected by the VSensor at different locations, and/or with respect to different (types of) input that may have caused the detected vibrations. For example, charts 310 and 320 correspond to placement of the VSensor at optimal locations (e.g., the wrist area 210 and the elbow area 220, respectively). As shown in charts 310 and 320, the VSensor may provide, when placed at these optimal locations, very reliable capturing of bone vibrations corresponding to a user's speech (intended as audio input). On the other hand, when the VSensor is placed at a non-optimal/poor location, as represented in chart 330, the VSensor may fail to capture (or insufficiently capture) any bone vibrations, thus failing to detect a user's speech (intended as audio input).

Chart 340 depicts performance of the VSensor when used to capture control input that may be expected to cause bone vibrations-e.g., finger tapping. In this regard, chart 340 corresponds to placement of the VSensor, again, at the optimal locations (e.g., the wrist area 210 and the elbow area 220). For example, a user's finger tapping may result in clicking in the bones of the wrist and the elbow. Accordingly, as shown in chart 340, due to the optimal placement the VSensor may provide very reliable capturing of the bone vibrations corresponding to the user's finger tapping.

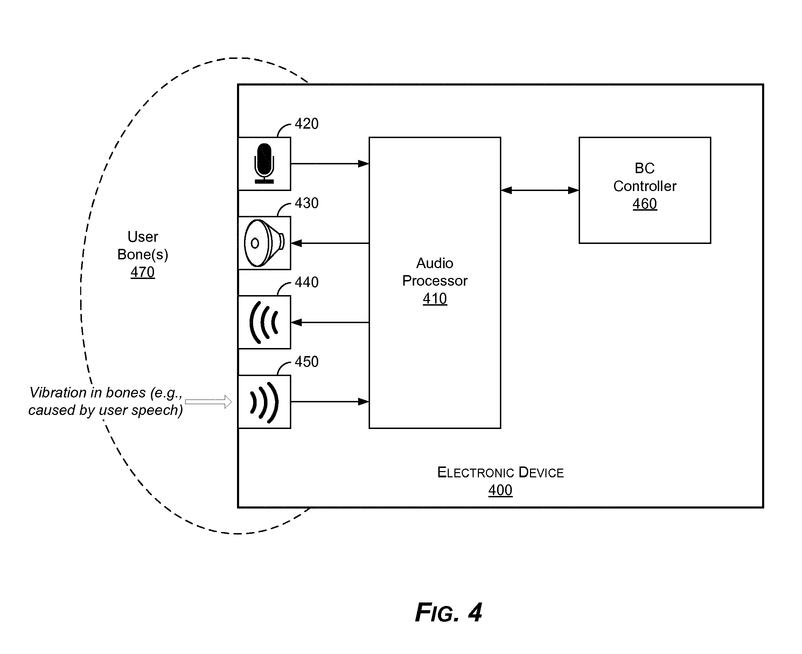

Fig. 4 illustrates an example structure of wearable electronic device that may support use of vibration sensors to captured vibrations in a user's bones. Referring to Fig. 4, there is shown an electronic device 400.

The electronic device 400 may comprise suitable circuitry for implementing various aspects of the disclosure. The electronic device 400 may correspond to, for example, the electronic device 100 of Fig. 1. In this regard, the electronic device 400 may be a wearable electronic device. Further, the electronic device 400 may support input and/or output of audio and other acoustic signals. The electronic device 400 may incorporate, for example, a plurality of audio input and/or output (I/O) components (e.g., microphones, speakers, and/or other audio I/O components), for use in outputting (playing) and/or inputting (capturing) audio, along with suitable circuitry for driving, controlling and/or utilizing the audio I/O components.

For example, as shown in the example implementation depicted in Fig. 4, the electronic device 400 may comprise an audio processor 410, an audio input device (e.g., a microphone) 420, an audio output device (e.g., a speaker) 430, bone conduction elements 440 and 450 (e.g., for use, respectively, in outputting and capturing signals based on bone conduction), and a bone conduction controller block 460.

In this regard, the microphone 420 and the bone conduction element 450 (e.g., a VSensor) may be configured for use in capturing audio or other acoustic signals; whereas the speaker 430 and the bone conduction element 440 may be used in outputting audio or other acoustic signals from the electronic device 400. While speakers (e.g., the speaker 430) and microphones (e.g., the microphone 420) may be configured to output or input audio or acoustic signals based on transmission or reception of signals (e.g., via vibration of membranes) through the air, bone conduction elements are used in outputting or inputting audio (or other acoustic) signals via or through a users' bones. For example, acoustics outputted by the bone conduction element 440 may cause vibrations in the bones, in a controlled manner, such that the signals can be captured by the internal parts of the ear, bypassing the eardrum. On the other hand, the bone conduction element 450 may be configured to capture vibrations propagating through the user's bones, for example as result of the user talking or other actions that may also cause vibrations in the bones (e.g., tapping fingers).

The audio processor 410 may comprise suitable circuitry for performing various audio signal processing functions in the electronic device 400. The audio processor 410 may be operable, for example, to process audio signals captured via input audio components (e.g., the microphone 430), to enable converting them to electrical signals-e.g., for storage and/or communication external to the electronic device 400. The audio processor 410 may also be operable to process electrical signals to generate corresponding audio signals for output via output audio components (e.g., the speaker 420). The audio processor 410 may also comprise suitable circuitry configurable to perform additional, audio related functions-e.g., voice coding/decoding operations. In this regard, the audio processor 410 may comprise analog-to-digital converters (ADCs), one or more digital-to-analog converters (DACs), and/or one or more multiplexers (MUXs), which may be used in directing signals handled in the audio processor 410 to appropriate input and output ports thereof. The audio processor 410 may comprise a general purpose processor, which may be configured to perform or support particular types of operations (e.g., audio related operations). Alternatively, the audio processor 410 may comprise a special purpose processor—e.g., a digital signal processor (DSP), a baseband processor, and/or an application processor (e.g., ASIC).

The bone conduction controller block 460 may comprise suitable circuitry for managing and/or controlling bone conduction related operations or functions in the electronic device 400. In this regard, the bone conduction controller block 460 may be configured to control bone conduction elements, to manage bone conduction related operations and/or functions (e.g., relating to outputting and/or inputting of signals via the bone conduction elements), and/or to process or analyze data obtained in conjunction with bone conduction. For example, the bone conduction controller block 460 may be configurable to determine settings or control parameters for bone conduction related resources (e.g., the bone conduction elements 240 and 250, and/or bone conduction related functions in the audio processor 210), and/or adjustments thereto.

In operation, the electronic device 400 may be utilized in performing various operations and/or functions, including inputting and/or outputting of audio (and other acoustic) signals. For example, when the electronic device 400 is used to input audio, audio signals may be captured via the microphone 420, and may be processed in the audio processor 410-e.g., converting them into digital data, which may then be stored and/or communicated external to the electronic device 400. When the electronic device 400 is used to output audio, the electronic device 400 may receive and digital data comprising audio content (e.g., received in signals from other electronic devices, such as during voice calls or other audio related data exchanges; or read from internal storage resources or suitable media storage devices, such as memory used to store music and other multimedia), process the digital data to extract the audio content, and then process the audio content via the audio processor 410 to convert them to audio signals. The audio signals may then be outputted via the speaker 430.

In some instances, the electronic device 400 may be configured to support input and/or output of audio signals using bone conduction-in lieu of or in addition to over-the-air audio input/output, via the microphone 420 and/or the speaker 430. In this regard, audio signals intended for bone conduction output may be processed particularly via the audio processor 410, to make them suited for outputting via the bone conduction element 440. On the other hand, the bone conduction element 450 may be used to capture signals (e.g., vibrations propagating in user's bones, corresponding to audio such as speech), with the captured signals being processed in the audio processor 410.

In some instances, the electronic device 400 may be configured to provide adaptive monitoring and control of certain aspects of bone conduction operations. In this regard, the bone conduction controller 460 may be configured to monitor the bone conduction elements 440 and 450, and analyze data obtained and/or relating to bone conduction elements or functions thereof, such as to assess quality of bone conduction and/or to determine any adjustments that may be needed to enhance bone conduction. For example, the bone conduction controller 460 may be operable to analyze signals relating to bone conduction (e.g., signals captured via the bone conduction element 450), such as to determine if the electronic device 400, or at least the bone conduction elements thereof, are placed at optimal location. The determination may be based on predefined 'knowledge'-e.g., pre-stored information identifying particular areas on a typical human body that are known to provide optimal bone conduction. Further, the bone conduction controller 460 may be operable to adaptively develop subjective information about particular users, such as based on information obtained from other audio related operations (e.g., over-the-air audio input/output), user input indicating a user's perception of the quality of bone conduction (e.g., based on a user indicating as much on suitable means, such as touch screen, keypad, or the like).

In some example implementations, the electronic device 400 (which may be wearable electronic device) may be configured to utilize bone conduction sensing in conjunction with over-the-air audio input means (e.g., microphones), to enhance audio input performance. For example, the bone conduction element (VSensors) 450 may be used to detect and/or capture vibrations in user's bones 470. The vibrations in a user's bones 470 may result from, at least in some instances, the user's actions which may be intended to be inputting audio (e.g., speaking) and/or may be intended to provide other information (e.g., finger tapping as means for providing control information), as described with respect to Figs. 1, 2, and 3A-3C. In this regard, the utility of the bone conduction element (VSensors) 450 in support of audio input and/or other bone vibration based operations may depend on placement of the electronic device 400 (or the bone conduction element (VSensors) 450 in particular). The signals obtained via the bone conduction element (VSensors) 450 may be used to enhance audio related operations. For example, the bone conduction element (VSensors) 450 may be used, once determined to be positioned at a suitable bone conduction location, to detect when the user is speaking. Further, the signals captured by the bone conduction element (VSensors) 450, corresponding to the user's speech, may be processed via the audio processor 410 and/or the bone conduction controller 460. The resultant data may then be used-e.g., in noise reduction. For example, the signals information obtained via the bone conduction element (VSensors) 450, presumably representing the user speech, may be used to distinguish user speech as captured in the input from the microphone 410 (from other undesired audio—e.g., ambient noise), thus ensuring that only user speech is included in the generated data. Accordingly, use of the bone conduction element (VSensors) 450 obviates the need to move the wearable electronic device closer to the user's mouth. In other words, the user can carry on a normal conversation without needing to hold the user's hand to the user's mouth and without requiring that the user otherwise speak directly into the watch microphone.

In some instances, VSensors (e.g., the VSensor 450) may be configured and/or used as VADs (voice activation detectors). For example, when a VSensor is configured to function as VAD, only a signal detected as propagating through the user's bones may be treated (e.g., after further assessment) a voice activation signal. Thus, the use of the VSensor in such manner may guarantee that only signals coming from the intended person (e.g., a user wearing the wearable device) would result in voice activation, and no other person(s) would be able to activate (intentionally or accidently) the wearable device.

Further, VSensors used as VADs may also be configured to perform and/or support noise reduction operations. In this regard, noise reduction performed in this manner may be applied as adaptation operation—e.g., the noise reduction may be adapted based on determination of whether or when intended person (user wearing the wearable device) is talking or not. For example, the adaptation of the noise reduction process may be done when the person is not talking, and as such the noise reduction supported in the system can be adapted to the ambient noise. In other words, when the user of the wearable of the device is not talking (as determined by now detecting any signals via the VSensor/VAD), it may be presumed that any picked up audio (e.g., via microphone 420) may correspond to ambient noise. Thus, such captured audio may be proceeds, and information about may be used thereof as characteristics of ambient noise, allowing performing noise reduction of elements corresponding to ambient noise when desired input is captured via the VSensor.

The bone conduction element (VSensors) 450 may also be used to support bone vibration based control interactivity. For example, in some instance vibrations in the user's bones 470 may result from particular user actions that are intended as a means for providing control input. Tapping patterns may be used, for example, to provide control input, such as for controlling or adjusting audio related operations or functions. In this regard, the bone conduction element (VSensors) 450 may capture, once determined to be positioned at a suitable bone conduction location, bone vibrations, which may (or not) be caused by the user's finger tapping. The corresponding signals may then be processed (e.g., via the audio processor 410) and analyzed (e.g., via the bone conduction controller 460), to determine if the vibrations are indeed intended as tapping based control input. In this regard, the signals may be compared (e.g., by the bone conduction controller 460) against predefined tapping profiles (e.g., stored into the electronic device 400), to determine if the signals match with any predefined tapping profile. If there is a successful match, the corresponding commands or actions may be performed in the electronic device 400.

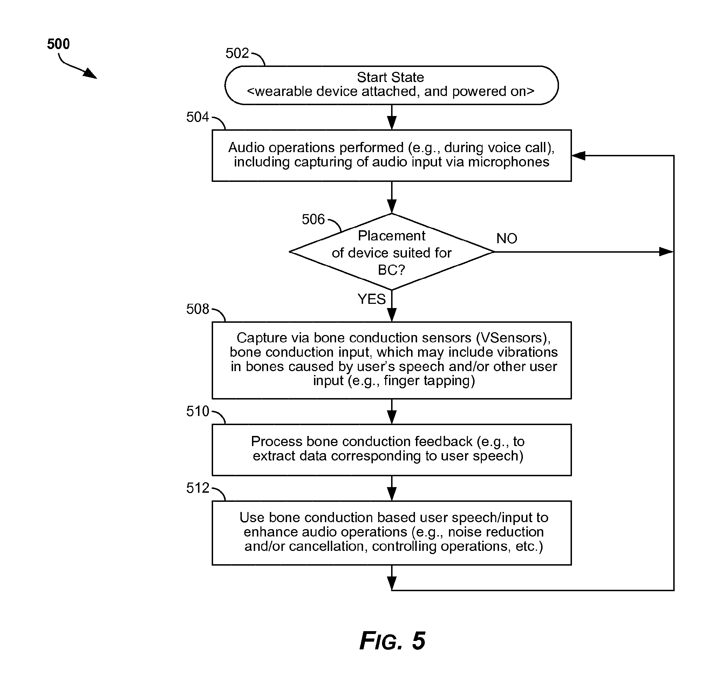

Fig. 5 is a flowchart illustrating an example process for using bone conduction sensing input in support of audio operations in wearable electronic devices. Referring to Fig. 5, there is shown a flow chart 500, comprising a plurality of example steps, which may be performed when using bone conduction sensory input to support audio operations in a wearable electronic device (e.g., the electronic device 400 of Fig. 4).

In starting step 502, the wearable electronic device may be attached to (or worn by) a device user, and may be powered on (and initiated) for operations.

In step 504, audio operations may be performed in the wearable electronic device (e.g., during voice call), which may include capturing of audio input via microphones.

In step 506, it may be determined if placement of bone conduction sensors is suitable for bone conduction operations-that is for capturing vibrations in bones. This may comprise determining if the wearable electronic device, of bone conduction sensors (e.g. VSensors) thereof are placed in predetermined optimal locations on the user's body, such as at the wrist, the elbow, or the like. In instances where it is determined that the placement of bone conduction sensors is not suitable for bone conduction operations, the process may loop back to step 504, to continue 'normal' audio operation (i.e., using microphones only).

Returning to step 506, in instances where it is determined that the placement of bone conduction sensors is suitable for bone conduction operations, the process may proceed to step 508. In step 508, bone conduction input may be captured via bone conduction sensors (VSensors). The bone conduction input may comprise vibrations in bones, caused by, e.g., a user's speech and/or other user input (e.g., finger tapping).

In step 510, bone conduction input may be proceed, such as to extract data corresponding to user speech or other user input.

In step 512, bone conduction based user speech and/or other user input may be used to enhance audio operations-e.g., noise reduction and/or cancellation, controlling operations, etc.

Other implementations may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for use of microphones with VSensors for wearable devices.

Accordingly, the present method and/or system may be realized in hardware, software, or a combination of hardware and software. The present method and/or system may be realized in a centralized fashion in at least one computer system, or in a distributed fashion where different elements are spread across several interconnected computer systems. Any kind of computer system or other system adapted for carrying out the methods described herein is suited. A typical combination of hardware and software may be a general-purpose computer system with a computer program that, when being loaded and executed, controls the computer system such that it carries out the methods described herein. Another typical implementation may comprise an application specific integrated circuit or chip.

The present method and/or system may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form. Accordingly, some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. A method, comprising:
in a wearable electronic device:
obtaining, via a bone conduction element that is in contact with body of a user of the wearable electronic device, acoustic signals propagating through the body of the user;
processing the acoustic signals obtained via the bone conduction element; and
adaptively controlling audio operations of the wearable electronic device based on the processing of the acoustic signals.

2. The method of claim 1, wherein the audio operations comprise noise reduction or cancellation.

3. A system, comprising:
a wearable electronic device, which comprise bone conduction element and one or more circuits, the one or more circuits being operable to:
obtain, via the bone conduction element that is in contact with body of a user of the wearable electronic device, acoustic signals propagating through the body of the user;
process the acoustic signals obtained via the bone conduction element; and
adaptively control audio operations of the wearable electronic device based on the processing of the acoustic signals.

4. The system of claim 3, wherein the audio operations comprise noise reduction or cancellation.

5. The system of claim 4, wherein:
the wearable electronic device comprises a over-the-air audio input component; and
the one or more circuits are operable to adaptively control the noise reduction or cancellation when capturing audio input from the user via the over-the-air audio input component of the wearable electronic device and/or when capturing acoustic signals via the bone conduction element.

6. The system of claim 5, wherein the over-the-air audio input component comprises a microphone embedded in the wearable electronic device.

7. The system of claim 5, wherein the one or more circuits are operable to adaptively control the noise reduction or cancellation by using the obtained acoustic signals to identify ambient or other types of noise in the audio input captured via the over-the-air audio input component.

8. The system of claim 5, wherein the adaptive control of the noise reduction or cancellation comprises:
the bone conduction element is operable to determine if no acoustic signals are propagating through the body of the user;
when no acoustic signals are propagating through the body of the user, the over-the-air component is operable to capture an audio input;
the one or more circuits are operable to process the captured audio input, to generate ambient noise data; and
the one or more circuits are operable to subsequently apply the ambient noise date during noise reduction or cancellation.

9. The system of claim 3, wherein the processing comprises determining when the acoustic signals correspond to speech by the user.

10. The system of claim 9, wherein the one or more circuits are operable to identify during processing of the acoustic signals, when the acoustic signals correspond to speech by the user, portion of the acoustic signals corresponding to speech by the user.

11. The system of claim 3, wherein the processing comprises determining when the acoustic signals correspond to control input by the user, the control input being provided such that it results in vibrations in the body of the user.

12. The system of claim 11, wherein the one or more circuits are operable to identify during processing of the acoustic signals, when the acoustic signals correspond to control input by the user, portions of the acoustic signals comprise corresponding to one or more particular control command.

13. The system of claim 12, wherein the one or more circuits are operable to determine the one or more particular control command based on matching of the identified portions with one or more predefined patterns.

14. The system of claim 3, wherein the bone conduction element is configurable for operation as voice activation detector (VAD).

15. The system of claim 14, wherein the one or more circuits are operable to, when the bone conduction element is configured for operation as voice activation detector (VAD):
determine when there are is acoustic signals propagating through the body of the user; and
when no acoustic signals are propagating through the body of the user, ignore over-the-air audio signals captured by the wearable electronic device.
